# EUROPÄISCHE PATENTSCHRIFT

(11) **EP 1 303 565 B1**
(45) Veröffentlichungstag und Bekanntmachung des Hinweises auf die Patenterteilung: **23.08.2006**
(21) Anmeldenummer: 01965059.7
(22) Anmeldetag: 04.07.2001
(51) Int. Cl.: C08K 5/134, C08K 5/20, C08K 5/375

(54) **STABILISATOREN, INSBESONDERE FÜR THERMOPLASTISCHE POLYURETHANE**
STABILISERS, IN PARTICULAR FOR THERMOPLASTIC POLYURETHANES
STABILISANTS, EN PARTICULIER POUR POLYURETHANNES THERMOPLASTIQUES

(30) Priorität: 05.07.2000 DE 10032582
(43) Veröffentlichungstag der Anmeldung: 23.04.2003
(73) Patentinhaber: BASF Aktiengesellschaft, 67056 Ludwigshafen (DE)
(72) Erfinder: MALZ, Hauke, 49356 Diepholz (DE); FLUG, Thomas, 49419 Wagenfeld (DE); BÖHME, Peter, 01561 Böhla (DE); KAMIETH, Markus, 69221 Dossenheim (DE)
(86) Internationale Anmeldenummer: PCT/EP2001/007636
(87) Internationale Veröffentlichungsnummer: WO 2002/002684

(56) Entgegenhaltungen:
- EP-A- 0 332 761
- WO-A-94/22945
- PATENT ABSTRACTS OF JAPAN vol. 1996, no. 08, 30. August 1996 (1996-08-30) & JP 08 092165 A (NIPPON NYUUKAZAI KK), 9. April 1996 (1996-04-09) in der Anmeldung erwähnt

## Beschreibung

Die Erfindung bezieht sich auf Stabilisatoren, bevorzugt amorphe oder flüssige Stabilisatoren, enthaltend mindestens zwei phenolische Gruppen, die durch ein Polyol und/oder Amin mit einem zahlenmittleren Molekulargewicht von 100xF g/mol bis 150xF g/mol, wobei der Ausdruck F die Anzahl der phenolischen Gruppen im Molekül darstellt, als Verbindungsrest (II) miteinander verbunden sind. Zur Berechnung des erfindungsgemäßen Molekulargewichtsbereiches wird erfindungsgemäß beispielsweise die Anzahl der phenolischen Gruppen mit 100 und 150 multipliziert. Bei einer Anzahl von zwei phenolischen Gruppen (F=2) erhält man somit einen Molekulargewichtsbereich von 200 bis 300 g/mol. Des weiteren bezieht sich die Erfindung auf Kunststoffe, insbesondere thermoplastische Kunststoffe, insbesondere thermoplastische Polyurethane enthaltend derartige Stabilisatoren, Verfahren zur Herstellung von thermoplastischen Polyurethanen und die Verwendung der Stabilisatoren.

Kunststoffe, beispielsweise thermoplastische Polyurethane werden mit Thermo- und UV-Stabilisatoren stabilisiert, um die Abnahme der mechanischen Eigenschaften und die Verfärbung der Produkte aufgrund oxidativer Schädigung zu minimieren. Gängige Antioxidantien, welche in der Technik Verwendung finden, sind z.B. phenolische Stabilisatoren, die unter verschiedenen Markennamen angeboten werden. Auch in der Literatur sind derartige phenolische Stabilisatoren bereits allgemein beschrieben.

DE-A-21 33 374 beschreibt Stabilisatoren mit zwei phenolischen Gruppen, die durch Veresterung über einen Polyetherolrest miteinander verbunden sind. EP-A 332 761, DE-A 23 64 126, US 40 32 562 und JP 08092165-A beschreiben sehr allgemein ähnliche Stabilisatoren wie DE-A 21 33 374.

Die handelsüblichen Stabilisatoren weisen insbesondere den Nachteil auf, dass sie als kristalline Feststoffe schwer zu dosieren und in der Regel hochschmelzend sind, wodurch eine gleichmäßige Einarbeitung bei der Synthese oder Verarbeitung insbesondere eines thermoplastischen Polyurethans erschwert wird. Zudem weisen die gängigen Stabilisatoren die Tendenz auf, aus dem Produkt auszumigrieren und als Belag an der Oberfläche auszublühen. Dies führt zu einem unkontrollierten Verlust an Stabilisator und zu einer Beeinträchtigung der optischen Eigenschaften des Produktes.

Ziel der vorliegenden Erfindung war es somit, Stabilisatoren zu entwickeln, die einfach, kontrollierbar, homogen und reproduzierbar in Kunststoffe, insbesondere thermoplastische Polyurethane eingearbeitet werden können. Zudem sollten die Stabilisatoren insbesondere in thermoplastischen Polyurethane weitgehend migrations- und ausblühfrei bei allen Temperaturen sein, d.h. eine deutlich geringere Belagbildung auf der Oberfläche der thermoplastischen Polyurethane bilden. Des weiteren sollten die Kompatibilität des Stabilisators insbesondere mit thermoplastischen Polyurethanen als auch die stabilisierende Wirkung optimal aufeinander abgestimmt werden, um bezüglich beider Eigenschaften eine besonders effektive Wirkung bei gleichzeitig möglichst geringem Materialeinsatz zu erreichen.

Diese Aufgabe konnte durch die eingangs beschriebenen Stabilisatoren gelöst werden.

Durch das bevorzugte Molekulargewicht der Stabilisatoren von mindestens 600 g/mol, besonders bevorzugt 600 bis 10000 g/mol konnte das Migrationsverhalten, d.h. das Fogging- das und Ausblühverhalten der Stabilisatoren erheblich verbessert werden.

Die Stabilisatoren enthalten zwei Struktureinheiten. Zum einen mindestens zwei phenolische Gruppen als Wirkstoffgruppen (I), die über einen kompatibilisierend und amorphisierend wirkenden Rest, in dieser Schrift auch als Polyol und/oder Amin bezeichnet, beispielsweise Polyether, Polyester, Polycarbonat, Polythioether und/oder Polyetherpolythioether miteinander verbunden sind. Nachfolgend werden in dieser Schrift "Polyol und/oder Amin", d.h. der Verbindungsrest (II), auch abgekürzt als "Polyol" bezeichnet. Der Polyether, Polyester, Polycarbonat, Polythioether und/oder Polyetherpolythioether stellt den Verbindungsrest (II) dar. Die Verbindung der phenolischen Gruppen (I) mit dem Verbindungsrest (II) kann beispielsweise über Estergruppen, Amidgruppen und/oder Thioestergruppen, bevorzugt Estergruppen und Amidgruppen, insbesondere Estergruppen hergestellt werden. Dabei weisen die dargestellten kompatibilisierend und amorphisierend wirkenden Reste mindestens eine, bevorzugt mindestens zwei funktionelle Gruppen auf, die gegenüber Carboxylgruppen reaktiv sind, beispielsweise Hydroxylgruppen und/oder Aminogruppen, bevorzugt Hydroxylgruppen. Der Ausdruck "Polyol" in Bezug auf den Verbindungsrest (II) schließt somit auch die entsprechenden Amine, insbesondere Diamine mit ein. Beispielsweise kann die Herstellung der erfindungsgemäßen Stabilisatoren demnach durch allgemein bekannte Veresterung und/oder Amidierung von Wirkstoffen, die mindestens eine phenolische Gruppe sowie mindestens eine Carboxylgruppe aufweisen, mit Polyetherolen, Polycarbonatolen, Polyesterolen, Polythioetherolen und/oder Polyetherpolythioetherolen, die mindestens zwei freie, gegenüber Carboxylgruppen reaktive Gruppen aufweisen, beispielsweise Hydroxylgruppen und/oder Aminogruppen, erfolgen.

Beispielsweise können als Wirkstoffgruppen (I) folgende Gruppen 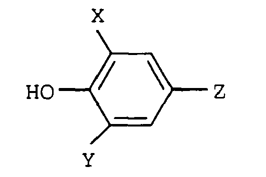 vorliegen:
wobei
- X, Y:: unabhängig voneinander Wasserstoff, geradkettige, verzweigtkettige oder cyclische Alkylgruppen mit 1 bis 12 Kohlenstoffatomen,
- Z:: mindestens eine über eine kovalente Bindung oder einen Alkylenrest mit dem Phenolrest verbundene Carboxylgruppe z.B. Estergruppe.

Bevorzugt werden als Ausgangsgruppen folgende Verbindungen eingesetzt:

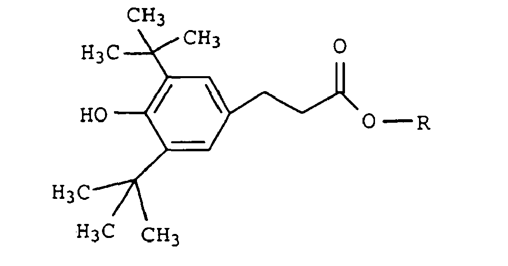

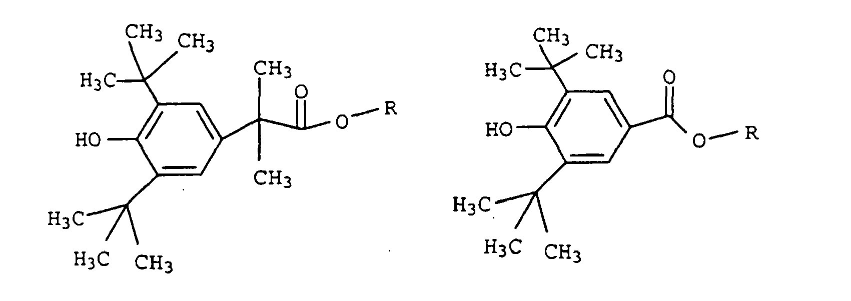

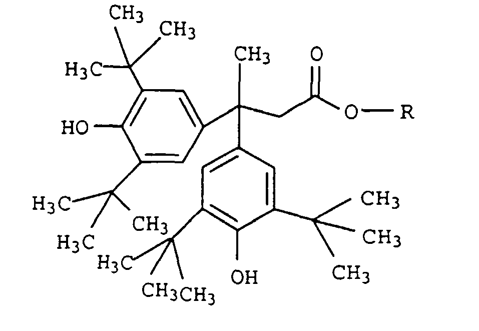

Besonders bevorzugt als (I) ist folgende Verbindung:

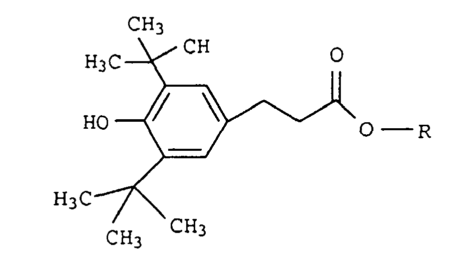

In den oben dargestellten Formeln hat R bevorzugt die folgende Bedeutung: H, Methyl, Ethyl und/oder Propyl

Der Rest (I) kann zur Verbindung mit dem Verbindungsrest (II) als Anhydrid, Säurechlorid, Ester oder freie Säure eingesetzt werden. Entsprechend variiert der Rest "R" bzw. "Z" in den obigen Formeln.

Diese phenolischen Gruppen (I) werden erfindungsgemäß durch einen Verbindungsrest (II) über die Carboxylgruppe von (I) miteinander verbunden. Der erfindungsgemäße Verbindungsrest (II) weist ein zahlenmittleres Molekulargewicht von 100xF g/mol bis 150xF g/mol auf, wobei der Ausdruck F die Anzahl der phenolischen Gruppen als Wirkstoffgruppen (I) darstellt. Dieses Molekulargewicht bezieht sich auf (II). Durch dieses Molekulargewicht von (II) wird das Massenverhältnis von kompatibilisierendem Rest (II) zur Wirkstoffgruppe (I) optimiert. Bei der Bestimmung des Molekulargewichts (II) ist gegebenenfalls der Stickstoff oder der Sauerstoff, über den (II) in der Amid- oder Esterstruktur an (I) gebunden ist, mitzuzählen.

Erfindung gemäss sind zudem Verbindungsreste (II), bei denen die Molmasse nicht einheitlich ist, d.h. bei denen das zahlenmittlere Molekulargewicht kleiner als das gewichtsmittlere Molekular-gewicht ist (Mₙ < M_{w}) ist. Durch diese Molekulargewichtsverteilung wird eine unerwünschte Kristallisation der Stabilisatoren unterdrückt.

Als Verbindungsrest (II) können beispielsweise allgemein übliche Polyole, beispielsweise Polyesterole, Polycarbonatole, Polyetherole, Polythioetherole und/oder Polyetherpclythioetherole, bevorzugt Polyetherole, Polythioetherole und/oder Polyetherpolythioetherole, insbesondere Polyetherole eingesetzt werden, die mindestens zwei gegenüber Carboxylgruppen reaktive Gruppen aufweisen, beispielsweise Hydroxylgruppen, Thiolgruppen und/oder Aminogruppen, beispielsweise primäre Aminogruppen, die mit Carboxylgruppen von (I) umgesetzt werden können zur Herstellung der erfindungsgemäßen Stabilisatoren. Der Verbindungsrest (II) kann linear oder verzweigt aufgebaut sein.

Beispielsweise können die Stabilisatoren folgende allgemeine Strukturen aufweisen:

(I)-X-R-[Y-R]ₙ-X- (I)

oder 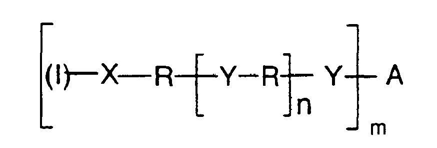 wobei
(I) die eingangs dargestellte Wirkstoffgruppe darstellt, die über ihre Carboxylgruppe gebunden ist,
   - X:: -O-, -S- oder -NH-
   - Y:: -O- oder -S-
   - R:: C₂- bis C₁₂-Alkylen, wobei der Alkylenrest geradkettig oder verzweigt sein kann
   - n:: eine ganze Zahl darstellt, mit der das erfindungsgemäße Molekulargewicht erreicht wird
   - m:: 2, 3, 4, 5, 6, 7 oder 8
   - A:: Kohlenwasserstoffgerüst mit 3 bis 20 Kohlenstoffatomen
und wobei X, Y und R, soweit sie mehrfach in (II) vorkommen, jeweils unabhängig voneinander unterschiedliche Bedeutungen haben können. Z.B. kann X innerhalb eines Verbindungsrestes (II) sowohl Schwefel als auch Sauerstoff bedeuten. Die Definition von n gilt für alle in dieser Schrift vorkommenden Formeln. Bevorzugt sind Verbindungsreste (II), die mindestens zwei Alkenylgruppen enthalten, die eine unterschiedliche Anzahl an Kohlenstoffatomen aufweisen.

Bevorzugt kommen als (II) folgende Reste in Betracht:
(i) 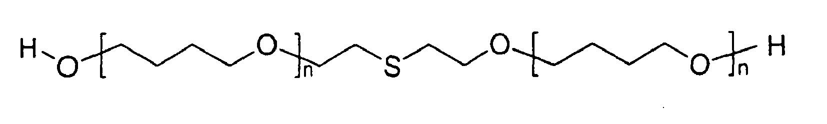
(ii) Polytetrahydrofuran mit einem zahlenmittleren Molekulargewicht von 200 bis 280 g/mol
(iii) 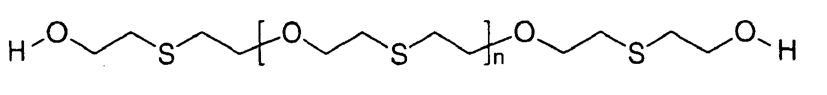
(iv) Polyethylenglykol mit einem zahlenmittleren Molekulargewicht von 180 g/mol bis 280 g/mol
(v) 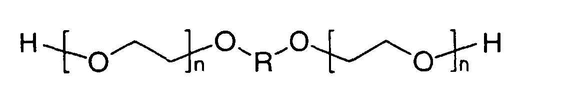
   - n, m:: jeweils eine ganze Zahl, wobei n und m gleich oder verschieden sein können und mit der Summe von n und m das erfindungsgemäße Molekulargewicht erreicht wird
   - R =: C₅- bis C₁₂-Alkyl, linear oder verzweigt
(vi) Polyester der Adipinsäure, beispielsweise mit Diolen, die 2 bis 10, bevorzugt 2 bis 6 Kohlenstoffatome aufweisen, z.B. Butandioladipate und/oder Butandiol/Ethylenglykoladipate
(vii) Ein trifunktionelles Polyetherol, z.B. Lupraphen® VP 9266 (BASF Aktiengesellschaft)
(viii) 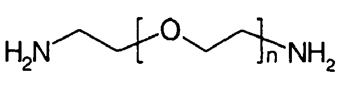 wobei n so gewählt ist, dass die zahlenmittlere Molmasse des Polyetheramins 180 g/mol bis 280 g/mol ist.

Darüber hinaus kann es vorteilhaft sein, verschiedene Reste (II) zu vermischen und die Mischung mit (I) umzusetzen, um die Viskosität, Kompatibilität, Löslichkeit und das Ausblühverhalten des resultierenden Stabilisators ideal einzustellen.

Überraschenderweise hat sich gezeigt, dass Diole der Formel
(ix) 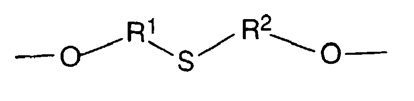 mit
   R¹ = CₓH₂ₓ mit X = 1-6
   R² = CₓH₂ₓ mit X = 1-6 und
   R¹ ≠ R²
ebenfalls amorph und deshalb gut bei Synthese und Verarbeitung in den Kunststoff einzuarbeiten sind.

Sind mehr als ein Schwefelatom in (II), so sind solche Verbindungsreste (II) bevorzugt, in denen Schwefel und Sauerstoff alternierend vorliegen und jeweils durch einen Alkylenrest getrennt sind. Dies führt zu einem optimalen Verhältnis von Schwefel, der als sekundärer Stabilisator wirkt, und Sauerstoff, der dem Stabilisator Polarität und damit Kompatibilität verleiht.

Der Vorteil eines flüssigen Stabilisators ist die im Vergleich zur Feststoffdosierung leichte Flüssigdosierung. Dies bedingt, dass der fertige Stabilisator eine bestimmte Viskosität besitzt. Da die Viskosität eine Funktion der Temperatur ist (beschrieben durch einen Arrheniusplot und die Aktivierungsenthalpie Eₒ), besteht hier die Möglichkeit, zwei weitere Kriterien für die Auswahl der Stabilisatoren zu verwenden, nämlich die Viskosität bei einer bestimmten Temperatur, oder aber die Viskosität bei Raumtemperatur und die Aktivierungsenthalpie.

Geeignet für eine leichte Einarbeitung sind solche Reste (II), bei denen das Kondensationsprodukt aus (I) und (II) eine Viskosität bei Raumtemperatur (25°C) von η = 10⁻²-10² Pas hat, bevorzugt aber η = 10⁻¹-10¹ Pas, oder aber eine Viskosität von η = 10¹-10⁴ Pas bei Raumtemperatur und eine Aktivierungsenthalpie von Eₒ = 50 bis 200 kJ/mol, bevorzugt aber η = 10²-10³ Pas und eine Aktivierungsenthalpie Eₒ = 70 bis 120 kJ/mol, wobei sich die Viskosität bei verschiedenen Temperaturen extrapolieren lässt nach der Gleichung:
- a_{T}: = η(T)/η(Tₒ)
- a_{T}: = exp(Eₒ/R*(1(T-1/Tₒ))
- R: = allgemeine Gaskonstante
- Tₒ: = Viskosität bei Raumtemperatur

Die erfindungsgemäßen Stabilisatoren können durch allgemein bekannte Veresterungs-, Amidierungs- bzw. Umesterungs- oder Umamidierungsverfahren hergestellt werden. Zu Beschleunigung der Reaktion können allgemein bekannte Katalysatoren verwendet werden, z.B. Zinnverbindungen wie Dibutylzinndilaurat und/oder Dimethylzinndilaurat, Titanverbindungen wie Titantetrabutylat, Sulfonsäuren wie Toluolsulfonsäure oder basische Katalysatoren wie Lithiumhydroxid, Lithuimmethylat, Lithiumethylat, Kaliumhydroxid, Kaliummethylat, Kaliumethylat, Kalium-tert.-butylat, Natriumhydroxid Natriummethylat, Natriumethylat oder/oder Natrium-tert.butylat, bevorzugt aber Kaliummethylat oder Kalium tert.butylat.

Es hat sich gezeigt, dass es vorteilhaft ist, den Katalysator nicht auf einmal zur Reaktionsmischung zu geben, sondern nach und nach zuzudosieren, da so die Reaktionszeit verkürzt werden kann.

Werden Metallkatalysatoren verwendet, so wird das Polyol (II), z.B. ein Polytetramethylenglykol und die Wirkstoffgruppe (I) z.B. 3-(3,5-Ditert.-Butyl-4-hydroxyphenyl)-propionsäuremethyl-ester in einen Reaktor gegeben und auf 100°C aufgeheizt. Die Lösung wird inertisiert. Danach werden 10 bis 1000 ppm bevorzugt 10 bis 500 ppm besonders bevorzugt 10 bis 100 ppm des Metallkatalysators, z.B. Dimethylzinndilaurat zur Lösung zugegeben. Danach wird die Reaktionstemperatur auf 120°C bis 200°C bevorzugt 130 bis 170°C angehoben und das entstehende Methanol wird abdestilliert. Nach erfolgter Umsetzung kann der erfindungsgemäße Stabilisator wie erhalten verwendet werden. Gegebenenfalls kann der erfindungsgemäße Stabilisator aber auch durch Überleiten z.B. über einen Dünnschichtverdampfer von niedermolekularen Bestandteilen gereinigt werden.

Wird als Verbindungsrest (II) z.B. ein Polyetherol, z.B. ein Polyethylenglykol verwendet, so kann der basische Katalysator, der zur Herstellung des Polyethylenglykols verwendet wurde zur Herstellung des erfindungsgemäßen Stabilisator verwendet werden, das heißt, dass der Katalysator nach Herstellung des Polyetherols nicht abgetrennt werden muss. In diesem Fall wird das Polyetherol (II) typischerweise in einen Reaktor gegeben. Danach wird die Wirkstoffgruppe (I), z.B. 3-(3,5-Ditert.-Butyl-4-hydroxyphenyl)-propionsäuremethylester, in den Reaktor gegeben und die Mischung auf 100°C aufgeheizt. Nach erfolgter Inertisierung werden soviel basischer Katalysator,z.B. Kaliummethylat zu dem Reaktionsansatz gegeben, dass sich die Summe des zudosierten Kaliummethylats und des im Polyetherol (II) aus der Synthese verbliebenen Katalysators zu 500 bis 5000 ppm bevorzugt 1000 bis 2000 ppm bezogen auf das Kaliummethylat addiert. Danach wird die Reaktionstemperatur auf 120°C bis 200°C bevorzugt 130 bis 170°C besonders bevorzugt 140 bis 150°C angehoben und das entstehende Methanol wird abdestilliert. Gegebenenfalls kann zur Umsatzerhöhung während der Reaktion noch Kaliummethylat nachdosiert werden.

Nach Abschluss der Reaktion kann der Kaliumkatalysator dann nach allgemein bekannten Verfahren zur Abtrennung von Kaliumkatalysatoren aus Polyetherolen vom erfindungsgemäßen Stabilisator abgetrennt werden. Zum Beispiel kann dies erfolgen durch Verwendung von Ionentauschern oder durch Verwendung von Phosphorsäure oder Salzsäure, bevorzugt aber Phosphorsäure.

Hierzu werden dann z.B. 85 % der stöchiometrischen Menge Phosphorsäure (stöchiometrisch bezieht sich hierbei auf die Menge des eingesetzten Kaliummethylats und kann daher variieren) zur Reaktionsmischung zudosiert und 30 min gerührt. Danach werden z.B. 1 bis 10 Gew.-% Wasser, bevorzugt 1 bis 5 Gew.-% Wasser zur Reaktionslösung gegeben und weitere 30 bis 240 min gerührt, bevorzugt aber 30 bis 60 min. Anschließend wird der erfindungsgemäße Stabilisator getrocknet, bis der Wassergehalt < 1 Gew.-% bevorzugt < 0,1 Gew.-% besonders bevorzugt < 0,05 Gew.-% liegt, und der ausgefallene Feststoff wird abgetrennt. Nach erfolgter Filtration kann der Stabilisator gegebenenfalls noch durch Überleiten z.B. über einen Dünnschichtverdampfer von niedermolekularen Bestandteilen befreit werden.

Die Synthese der phenolischen Wirkstoffgruppen (I) ist allgemein bekannt und Vorschriften der Synthese von 3-(3,5-Ditert.-Butyl-4-hydroxyphenyl)-propionsäuremethylester finden sich z.B. in US 3 644 482 Seite 4 Zeile 28.

Zur Herstellung von 3-(3,5-Ditert.-Butyl-4-hydroxyphenyl)-propionsäuremethylester kann z.B. 2,6-Di-tert.butylphenol und 0,1 bis 10 mol % bezogen auf 2,6-Di-tert.butylphenol eines basische Katalysatoren wie z.B. Lithiumhydroxid, Lithuimmethylat, Lithiumethylat, Kaliumhydroxid,Kaliummethylat, Kaliumethylat, Kalium-tert.-butylat, Natriumhydroxid Natriummethylat, Natriumethylat oder/oder Natrium-tert.butylat, bevorzugt aber Kaliummethylat oder Kalium tert.butylat in einen Reaktor gegeben werden. Nach Abdestillieren der korrespondierenden Säure z.B. Methanol, wenn Kaliummethylat eingesetzt wird oder Wasser, wenn Kaliumhydroxid verwendet wird,durch Erhitzen auf z.B. 120 bis 200°C bevorzugt aber 130 bis 160°C unter Verwendung eines Stickstofftreibstroms und/oder Vakuum wird die reaktive Mischung dann auf 120 bis 160°C bevorzugt auf 130 bis 150°C gebracht und Methylacrylat wird langsam zudosiert. Bevorzugt wird diese Zudosierung unter einem Druck durchgeführt, der größer ist als der Dampfdruck des Methylacrylats bei der gegebenen Reaktionstemperatur. So wird gewährleistet, dass das Methylacrylat nicht aus der Reaktionslösung durch Verdampfen entfernt wird. Bevorzugt werden 90 bis 120 mol-% Methylacrylat bezogen auf 2,6-Di-tert.butylphenol zum 2,6-Di-tert.butylphenol zudosiert, insbesondere aber 95 bis 110 mol-%. Nach 60 bis 180 min Reaktionszeit wird die Reaktion beendet. Das Reaktionsprodukt kann dann durch Neutralisation des alkalischen Katalysators und anschließende Umkristallisation bzw. Rektifikation auf allgemein bekannte Weise gereinigt werden.

Soll aber bei der anschließenden Herstellung des erfindungsgemäßen Stabilisators ein basischer Katalysator Verwendung finden, so kann dies auch dadurch erfolgen, dass aus dem Reaktionsprodukt eventuell vorhandenes überschüssiges Methylacrylat bei z.B. 60°C unter Vakuum und/oder Verwendung eines Stickstofftreibstroms entfernt wird und das Polyol (II) zu der Mischung zugegeben wird. Nach Inertisierung wird die Umesterungsreaktion dann wie oben beschrieben fortgeführt. Der Vorteil dieser Eintopf-Fahrweise liegt in der effizienten Nutzung des Reaktors und des Einsparens des Reinigungsschrittes.

Die erfindungsgemäßen Stabilisatoren können in allen bekannten Kunststoffen, beispielsweise Acrylsäure-Butadien-Styrol-Copolymeren (ABS), ASA, SAN, Polyacetale, Polyethylenoxyd, Polyester, wie Polymethylenterephtalate, Polyethylen, Polypropylen, Polybutylen, Polyisopren sowie Mischpolymerisate von Poly-a-olefinen, Polystyrol, EPM, EPDM, Vinylharze, die bei der Polymerisation von Vinylhalogeniden mit ungesättigten polymerisierbaren Verbindungen, beispielsweise Vinylestern, α,β-ungesättigten Aldehyden und ungesättigten Kohlenwasserstoffen, wie Butadien und Styrol, gebildet werden, PVC, Acrylatkautschuk, Polyester, Polyoxymethylen (POM),Schmieröle der aliphatischen Ester-Art (beispielsweise Di-(2-ethylhexyl)-azelat, Pentaerythrit-tetracaproat), tierische und pflanzliche Öle (beispielsweise Leinsamenöl, Fett, Talg, Schweineschmalz, Erdnussöl, Dorschlebertranöl, Rizinusöl, Palmöl, Maisöl, Baumwollsamenöl), Kohlenwasserstoffmaterialien (beispielsweise Gasolin, Mineralöl, Brennstofföl, trockene Öle, Schneidflüssigkeiten, Wachse, Harze und Kautschuk), Fettsäuren (z.B. Seifen), Polyamide, wie Polyhexamethylenadipinsäureamid und Polycaprolactam, Polycarbonat, und/oder kompakte oder zellige Polyurethan insbesondere thermoplastischen Polyurethanen, in dieser Schrift auch als TPU bezeichnet, zur Stabilisierung beispielsweise gegen thermooxidativen Abbau und UV-Strahlung eingesetzt werden. Außerdem sind die Stabilisatoren geeignet, allgemein organische Verbindungen zu stabilisieren, beispielsweise organische Verbindungen mit einem Molekulargewicht von 50bis 100000 g/mol, beispielsweise Polyester, Polyether, Polyesterole, Polyetherole. Bevorzugt werden die Stabilisatoren enthaltend in thermoplastischen Polyurethanen eingesetzt.

Bevorzugt enthalten die Kunststoffe, insbesondere die TPU die Stabilisatoren in einer Menge von 0,01 bis 5 Gew.-%, besonders bevorzugt 0,1 bis 2 Gew.-%, insbesondere 0,3 bis 1,5 Gew.-%, jeweils bezogen auf das Gewicht des thermoplastischen Kunststoffes.

Zusätzlich zu denen erfindungsgemäßen Stabilisatoren können weitere allgemein bekannte Stabilisatoren in den thermoplastischen Kunststoffen eingesetzt werden, beispielsweise Phosphite, Thiosynergisten, HALS-Verbindungen, UV-Absorber, Quencher, und sterisch gehinderte Phenole. Beispiele für diese Antioxidantien sind gegeben in EP-A 698 637, Seite 6, Zeile 12 bis Seite 9 Zeile 33.

Die erfindungsgemäßen Stabilisatoren können sowohl den gegenüber Isocyanaten reaktiven Verbindungen (b) vor oder bei der Herstellung der TPU als auch dem fertigen TPU, beispielsweise dem geschmolzenen oder erweichtem TPU zugeführt werden. Das thermoplastische Polyurethan kann thermoplastisch verarbeitet werden, ohne dass die Wirkung der erfindungsgemäßen Stabilisatoren verlorengeht.

Verfahren zur Herstellung von TPU sind allgemein bekannt. Beispielsweise können die thermoplastischen Polyurethane durch Umsetzung von (a) Isocyanaten mit (b) gegenüber Isocyanaten reaktiven Verbindungen mit einem Molekulargewicht von 500 bis 10000 und gegebenenfalls (c) Kettenverlängerungsmitteln mit einem Molekulargewicht von 50 bis 499 gegebenenfalls in Gegenwart von (d) Katalysatoren und/oder (e) üblichen Hilfs- und/oder Zusatzstoffen herstellt werden, wobei man die Umsetzung in Gegenwart der erfindungsgemäßen Stabilisatoren durchführt.

Im Folgenden sollen beispielhaft die Ausgangskomponenten und Verfahren zur Herstellung der bevorzugten TPU dargestellt werden.

Die bei der Herstellung der TPU üblicherweise verwendeten Komponenten (a), (b) sowie gegebenenfalls (c), (e) und/oder (f) sollen im Folgenden beispielhaft beschrieben werden:
a) Als organische Isocyanate (a) können allgemein bekannte aliphatische, cycloaliphatische, araliphatische und/oder aromatische Isocyanate eingesetzt werden, beispielsweise Tri-, Tetra-, Penta-, Hexa-, Hepta- und/oder Oktamethylendiisocyanat, 2-Methyl-pentamethylen-diisocyanat-1,5, 2-Ethylbutylen-diisocyanat-1,4, Pentamethylen-diisocyanat-1,5, Butylen-diisocyanat-1,4, 1-Isocyanato-3,3,5-trimethyl-5-isocyanatomethyl-cyclohexan (Isophoron-diisocyanat, IPDI), TODI, EDI, 1,4- und/oder 1,3-Bis(isocyanatomethyl)cyclohexan (HXDI), 1,4-Cyclohexan-diisocyanat, 1-Methyl-2,4- und/oder -2,6-cyclohexan-diisocyanat und/oder 4,4'-, 2,4'- und 2,2'-Dicyclohexylmethan-diisocyanat, 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), Diphenylmethandiisocyanat, 3,3'-Dimethyl-diphenyl-diisocyanat, 1,2-Diphenylethandiisocyanat und/oder Phenylendiisocyanat.
b) Als gegenüber Isocyanaten reaktive Verbindungen (b) können die allgemein bekannten gegenüber Isocyanaten reaktiven Verbindungen eingesetzt werden, beispielsweise Polyesterole, Polyetherole und/oder Polycarbonatdiole, die üblicherweise auch unter dem Begriff "Polyole" zusammengefasst werden, mit Molekulargewichten von 500 bis 8000, bevorzugt 600 bis 6000, insbesondere 800 bis 4000, und bevorzugt einer mittleren Funktionalität von 1,8 bis 2,3, bevorzugt 1,9 bis 2,2, insbesondere 2. Bevorzugt setzt man Polyetherpolyole ein, beispielsweise solche auf der Basis von allgemein bekannten Startersubstanzen und üblichen Alkylenoxiden, beispielsweise Ethylenoxid, Propylenoxid und/oder Butylenoxid, bevorzugt Polyetherole basierend auf Propylenoxid-1,2 und Ethylenoxid und insbesondere Polyoxytetramethylen-glykole. Die Polyetherole weisen den Vorteil auf, dass sie eine höhere Hydrolysestabilität als Polyesterole besitzen.
c) Als Kettenverlängerungsmittel (c) können allgemein bekannte aliphatische, araliphatische, aromatische und/oder cycloaliphatische Verbindungen mit einem Molekulargewicht von 50 bis 499, bevorzugt 2-funktionelle Verbindungen, eingesetzt werden, beispielsweise Diamine und/oder Alkandiole mit 2 bis 10 C-Atomen im Alkylenrest, insbesondere Butandiol-1,4, Hexandiol-1,6 und/oder Di-, Tri-, Tetra-, Penta-, Hexa-, Hepta-, Okta-, Nona- und/oder Dekaalkylenglykole mit 3 bis 8 Kohlenstoffatomen, bevorzugt entsprechende Oligo- und/oder Polypropylenglykole, wobei auch Mischungen der Kettenverlängerer eingesetzt werden können.
d) Geeignete Katalysatoren, welche insbesondere die Reaktion zwischen den NCO-Gruppen der Diisocyanate (a) und den Hydroxylgruppen der Aufbaukomponenten (b) und (c) beschleunigen, sind die nach dem Stand der Technik bekannten und üblichen tertiären Amine, wie z.B. Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan und ähnliche sowie insbesondere organische Metallverbindungen wie Titansäureester, Eisenverbindungen wie z.B. Eisen-(III)- acetylacetonat, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Die Katalysatoren werden üblicherweise in Mengen von 0,0001 bis 0,1 Gew.-Teilen pro 100 Gew.-Teile Polyhydroxylverbindung (b) eingesetzt.
e) Neben Katalysatoren (d) können den Aufbaukomponenten (a) bis (c) auch übliche Hilfsmittel und/oder Zusatzstoffe (e) hinzugefügt werden. Genannt seien beispielsweise oberflächenaktive Substanzen, Füllstoffe, Flammschutzmittel, Keimbildungsmittel, Oxidationsstabilisatoren, Gleit- und Entformungshilfen, Farbstoffe und Pigmente, gegebenenfalls zusätzlich zu den erfindungsgemäßen Inhibitoren weitere Stabilisatoren, z.B. gegen Hydrolyse, Licht, Hitze oder Verfärbung, anorganische und/oder organische Füllstoffe, Verstärkungsmittel und Weichmacher, Hydrolyseschutzmittel, insbesondere monomere und polymere aliphatische und aromatische Carbodiimide.

Nähere Angaben über die oben genannten Hilfsmittel- und Zusatzstoffe sind der Fachliteratur zu entnehmen.

Alle in dieser Schrift genannten Molekulargewichte weisen die Einheit [g/mol] auf.

Zur Einstellung von Härte der TPU können die Aufbaukomponenten (b) und (c) in relativ breiten molaren Verhältnissen variiert werden. Bewährt haben sich molare Verhältnisse von Komponente (b) zu insgesamt einzusetzenden Kettenverlängerungsmitteln (c) von 10 : 1 bis 1 : 10, insbesondere von 1 : 1 bis 1 : 4, wobei die Härte der TPU mit zunehmendem Gehalt an (c) ansteigt.

Bevorzugt werden zur Herstellung der TPU auch Kettenverlängerer (c) verwendet.

Die Umsetzung kann bei üblichen Kennzahlen erfolgen, bevorzugt bei einer Kennzahl von 60 bis 120, besonders bevorzugt bei einer Kennzahl von 80 bis 110. Die Kennzahl ist definiert durch das Verhältnis der insgesamt bei der Umsetzung eingesetzten Isocyanatgruppen der Komponente (a) zu den gegenüber Isocyanaten reaktiven Gruppen, d.h. den aktiven Wasserstoffen, der Komponenten (b) und (c). Bei einer Kennzahl von 100 kommt auf eine Isocyanatgruppe der Komponente (a) ein aktives Wasserstoffatom, d.h. eine gegenüber Isocyanaten reaktive Funktion, der Komponenten (b) und (c). Bei Kennzahlen über 100 liegen mehr Isocyanatgruppen als OH-Gruppen vor.

Die Herstellung der TPU kann nach den bekannten Verfahren kontinuierlich, beispielsweise mit Reaktionsextrudern oder dem Bandverfahren nach one-shot oder dem Prepolymerverfahren, oder diskontinuierlich nach dem bekannten Prepolymerprozess erfolgen. Bei diesen Verfahren können die zur Reaktion kommenden Komponenten (a), (b) und gegebenenfalls (c), (d) und/oder (e) nacheinander oder gleichzeitig miteinander vermischt werden, wobei die Reaktion unmittelbar einsetzt.

Beim Extruderverfahren werden die Aufbaukomponenten (a), (b) sowie gegebenenfalls (c), (d) und/oder (e) einzeln oder als Gemisch in den Extruder eingeführt, z.B. bei Temperaturen von 100 bis 280°C, vorzugsweise 140 bis 250°C zur Reaktion gebracht, das erhaltene TPU wird extrudiert, abgekühlt und granuliert.

Die Verarbeitung der erfindungsgemäß hergestellten TPU, die üblicherweise als Granulat oder in Pulverform vorliegen, zu den gewünschten Folien, Formteilen, Rollen, Fasern, Verkleidungen in Automobilen, Schläuchen, Kabelsteckern, Faltenbälgen, Schleppkabeln, Kabelummantelungen, Dichtungen, Riemen oder Dämpfungselementen erfolgt nach üblichen Verfahren, wie z.B. Spritzguss oder Extrusion.

Die nach den erfindungsgemäßen Verfahren herstellbaren thermoplastischen Polyurethane, bevorzugt die Folien, Formteile, Schuhsohlen, Rollen, Fasern, Verkleidungen in Automobilen, Wischerblätter, Schläuche, Kabelstecker, Faltenbälge, Schleppkabel, Kabelummantelungen, Dichtungen, Riemen oder Dämpfungselemente weisen die eingangs dargestellten Vorteile auf.

Die erfindungsgemäßen Vorteile sollen anhand der folgenden Beispiele dargestellt werden.

### Beispiele

### Beispiel 1

### (Synthese von 3-(3,5-di-tert.butyl-4-hydroxyphenyl)-propionat) terminiertem Polytetrahydrofuran)

50 g PTHF 250 (M_{w} = 237,4 g/mol, 0,21 mol) wurden mit 111,35 g 3-(3,5-Ditert.butyl-4-hydroxyphenyl)-propionsäuremethylester (292,4 g/mol; 0,38 mol) sowie 100 ppm Dibutylzinnlaurat in einen 250-ml-Kolben gegeben, gelöst, 20 min mit Stickstoff gespült und auf 180°C erhitzt. Das entstehende Methanol wurde in einer Kühlfalle (flüssiger Stickstoff) ausgefroren.

Nach 12 h wurde die Heizquelle entfernt und die Substanz unter Stickstoff abgekühlt. Man erhielt eine zähflüssige farblose Flüssigkeit. Analyse mittels GPC bestätigt den vollständigen Umsatz des 3-(3,5-di-tert.butyl-4-hydroxyphenyl)propionsäuremethylester.

### Beispiel 2

900 g PTHF 1000 wurden bei 45°C in einem 2-1-Rundkolben aufgeschmolzen. Anschließend erfolgte unter Rühren die Zugabe von 16,25 g des Produktes aus Beispiel 1 und 125 g Butandiol. Nach der Erwärmung der Lösung wurde unter Rühren in einem 2-1-Weißblecheimer auf 80°C wurden anschließend 600 g 4,4'-MDI zugegeben und gerührt, bis die Lösung homogen war. Anschließend goss man das TPU in eine flache Schale, in der das Produkt bei 24 h bei 100°C im Heizschrank getempert wurde.

### Beispiel 3

500 g Polyethylenglykol (M_{w} = 201,8 g/mol, 2,5 mol) wurden mit 1310 g 3-(3,5-Ditert.Butyl-4-hydroxphenyl)-propionsäuremethylester (292,4 g/mol; 5 mol) sowie 500 ppm Dibutylzinnlaurat in einen 300-ml-Kolben gegeben. Es wurde auf 170°C erhitzt. Durch die Lösung wurde vorsichtig Stickstoff geleitet. Das entstehende Methanol wurde in einem Liebigkühler auskondensiert. Nach 18 h wurde die Reaktion beendet. Analyse mittels GPC bestätigt den vollständigen Umsatz der Ausgangskomponenten.

### Beispiel 4

Eine Mischung aus 472 g PTHF 250 (M_{w} = 237 g/mol) und 402 g Polyethylenglykol (M_{w} = 201 g/mol) wurde mit 1018 g 3-(3,5-Ditert.-Butyl-4-hydroxyphenyl)-propionsäuremethylester (M_{w} = 292 g/mol, 4 mol) in einem 2000-ml-Kolben in Gegenwart von 500 ppm Dibutylzinnlaurat auf 180°C erhitzt. Während der Reaktion wurde vorsichtig Stickstoff durch die Mischung geleitet. Das entstehende Methanol wurde mit einem Liebigkühler kondensiert. Nach 18 h wurde die Reaktion beendet. Analyse mittels GPC zeigte einen vollständigen Umsatz der Ausgangskomponenten.

### Beispiel 5

Analog Beispiel 2 wurden drei thermoplastische Polyurethane (TPU) hergestellt. Probe 7a wurde mit 2 Gew.-% Produkt aus Beispiel 1 stabilisiert. Probe 7b wurde mit 2 Gew.-% Irganox® 1010 (Ciba) und Probe 7c mit 2 Gew.-% Irganox® 1330 (Ciba) stabilisiert. Das gegossene und getemperte TPU wurde gemahlen und unter üblichen Bedingungen zu Spritzplatten der Größe 80 mm * 120 mm * 2 mm verspritzt. Ein Teil der Spritzplatten wurde bei 80°C im Heizschrank gelagert, ein zweiter Teil bei Raumtemperatur. Nach 7 Wochen wurden die Proben auf Belagbildung hin untersucht. Nur Probe 7a war unter allen Bedingungen belagfrei.

| Probe | Raumtemperatur | 80°C |
|---|---|---|
| 7a | kein Belag | kein Belag |
| 7b | Belag | kein Belag |
| 7c | kein Belag | Belag |

### Beispiel 6

Für die Untersuchung der Wirksamkeit der erfindungsgemäßen Stabilisatoren zur Stabilisierung von Polyetherolen wurden nicht stabilisiertes Lupranol® 2080 (BASF Aktiengesellschaft) und Lupranol® 3300 (BASF Aktiengesellschaft) mit 1000 ppm bzw. 500 ppm Stabilisator aus Beispiel 1 stabilisiert. Zum Vergleich wurden die beiden Polyetherole mit Irganox® 1135 stabilisiert. Anschließend werden die Proben mittels DSC auf Stabilität hin untersucht.

| Polyol | Stabilisator | Einsatzmenge | DSC-Ergebnis |
|---|---|---|---|
| L 2080 | Beispiel 1 | 1000 ppm | 171°C |
| L 2080 | Irganox® 1135 | 1000 ppm | 171°C |
| L 3300 | Irganox® 1135 | 500 ppm | 169°C |
| L 3300 | Beispiel 1 | 500 ppm | 169°C |

Es zeigt sich, dass die erfindungsgemäßen Stabilisatoren mindestens so gut stabilisieren wie das kommerzielle Produkt Irganox® 1135. Dieses besitzt aber eine niedrige Molmasse von 400 g/mol, was zum Ausfoggen des Stabilisators führt. Der Stabilisator aus Beispiel 1 besitzt hingegen eine Molmasse von 800g/mol, was die Foggingproblematik verringert.

### Beispiel 7

155 g eines trifunktionellen Polyetherols (Lupranol® VP 9266, BASF Aktiengesellschaft) und 200 g 3-(3,5-di-tert.butyl-4-hydroxyphenyl)-propionsäuremethylester wurden in einen 500-ml-Kolben gegeben. Es wurde unter Stickstoffspülung auf 100°C erwärmt. Dann wurden 35 mg Titantetrabutylat zugegeben. Unter Rühren und weiterer Stickstoffspülung wurde auf 165°C erwärmt und ein leichtes Vakuum angelegt. Nach 2 h bei 165°C wurde auf 170°C erwärmt und nach weiteren 2 h auf 175°C. Nach weiteren 4 h wurde die Reaktion beendet.

### Beispiel 8

Für die Untersuchung der Wirksamkeit des erfindungsgemäßen Stabilisators zur Stabilisierung von Polyetherolen wurde nicht stabilisiertes Lupranol® 2080 (BASF Aktiengesellschaft) mit 1000 ppm bzw. 500 ppm Stabilisator aus Beispiel 7 stabilisiert. Anschließend wurden die Proben mittels DSC auf Stabilität hin untersucht.

| Konzentration Antioxidant | Beginn der Polyetherol-Zersetzung (DSC-Messung) |
|---|---|
| Ohne | 160°C |
| 500 ppm | 165°C |
| 1000 ppm | 168°C |
| 2000 ppm | 174°C |

Es zeigte sich, dass mit Zunahme der Stabilisatorkonzentration die Stabilität des Polyetherols zunahm.

### Beispiel 9

110 g Polytetrahydrofuran (PTHF 250) (Molekulargewicht: 226,85 g/mol; 0,4849mol) wurden mit 277,9g 3-(3,5-Ditert.Butyl-4-hydroxyphenyl)-propionsäuremethylester (Molekulargewicht: 292,4 g/mol; 0,9504 mol) sowie 1000 ppm Kaliummethylat in einen 500-ml-Kolben gegeben. Man spülte den Kolben mit Stickstoff und erhitzte dann unter Rühren auf 140°C. Durch die Lösung wurde während der Reaktion weiterhin Stickstoff durchgeleitet. Das entstandene Methanol wurde in einer Kühlfalle (flüssiger Stickstoff) ausgefroren. Nach 7 h wurde die Reaktion beendet. Die Analyse mittels GPC zeigte einen vollständigen Umsatz des 3-(3,5-Ditert.Butyl-4-hydroxyphenyl)-propionsäuremethylester.

Zur Entfernung des Kaliummethylats wurde bei 80°C Phosphorsäure (85 % der stöchiometrischen Menge des Kaliummethylates) zugegeben. Nach 30 min Rühren erfolgte die Zugabe von 3 Gew.-% Wasser bei 80°C bei einer Rührzeit von 2 h. Anschließend wurde das überschüssige Wasser durch Destillation entfernt sowie das ausgefallene Salz abfiltriert.

### Beispiel 10

Bei diesen Stabilisierungsversuchen wurden drei thermoplastische Polyurethane (TPU) auf Basis von Beispiel 2 hergestellt die unterschiedlich stabilisiert wurden.

A = unstabilisiert, B = 1 % Irganox® 1135, C = 1 % Stabilisator aus Beispiel 12.

Die hergestellten TPU wurden zu 2mm Spritzplatten verarbeitet. Hieraus wurden S2 Normstäbe ausgestanzt, die anschließend bei 130°C in einem Ofen gelagert wurden .Nach erfolgter Lagerung (1,2,4,6 Wochen) wurde nach DIN 53 504 die Zugfestigkeit (MPA) und die Reißdehnung (%) bestimmt.

### Zugfestigkeitswerte (in MPA)

| Produkt | 0-Probe | 1 Woche 130°C | 2 Wochen 130°C | 4 Wochen 130°C | 6 Wochen 130°C |
|---|---|---|---|---|---|
| A | 43 | 14 | 12 | 13 | 13 |
| B | 41 | 23 | 14 | 14 | 13 |
| C | 39 | 29 | 21 | 16 | 16 |

### Reißdehnungswerte (in %)

| Produkt | 0-Probe | 1 Woche 130°C | 2 Wochen 130°C | 4 Wochen 130°C | 6 Wochen 130°C |
|---|---|---|---|---|---|
| A | 460 | 600 | 410 | 310 | 230 |
| B | 470 | 680 | 670 | 440 | 290 |
| C | 460 | 700 | 760 | 760 | 600 |

Die Messwerte zeigen, dass die mit dem erfindungsmäßig stabilisierten Stabilisator geschützten Proben, weniger stark altern, als die Vergleichsproben.

### Beispiel 11

30 g (2-Hydroxyethyl)-(3-hydroxypropyl)sulfid (Molekulargewicht: 136,21 g/mol; 0,2202 mol) wurden mit 128,8 g 3-(3,5-Ditert.-Butyl-4-hydroxyphenyl)-propionsäuremethylester (Molekulargewicht: 292,4 g/mol; 0,4404 mol) sowie 2000 ppm Kaliummethylat in einen 250-ml- Kolben gegeben. Der Kolben wurde mit Stickstoff gespült und dann unter Rühren auf 140°C erhitzt. Durch die Lösung wurde während der Reaktion weiterhin Stickstoff durchgeleitet. Das entstandene Methanol wurde in einer Kühlfalle (flüssiger Stickstoff) ausgefroren worden. Nach 12 h wurde die Reaktion beendet. Die Analyse mittels GPC zeigte einen vollständigen Umsatz des 3-(3,5-Ditert.Butyl-4-hydroxyphenyl)-propionsäuremethylester.

Die Entfernung des Kaliumkatalysators erfolgte durch Zugabe von phosphorsäure (85 % der stöchiometrischen Menge des Kaliummethylates) bei 80°C. Nach 30 min Rühren wurden 3 Gew.-% VE-Wasser zugegeben und weitere 2 h gerührt. Anschließend wurde das überschüssige Wasser durch Destillation entfernt sowie das ausgefallene Salz abfiltriert.

### Beispiel 12

### (Synthese von 3-(3,5-di-tert.butyl-4-hydroxyphenyl)-propionat) terminiertem Polytetrahydrofuran)

50 g PTHF 250 (Molekulargewicht: 237,4 g/mol, 0,21 mol) wurden mit 111,35 g 3-(3,5-Ditert.butyl-4-hydroxyphenyl)-propionsäuremethylester (Molekulargewicht: 292,4 g/mol, 0,38 mol) sowie 50 ppm Dimethylzinndilaurat in einen 250-ml-Kolben gegeben, gelöst, 20 min mit Stickstoff gespült und auf 180°C erhitzt. Das entstehende Methanol wurde in einer Kühlfalle (flüssiger Stickstoff) ausgefroren.

Nach 12 h wurde die Heizquelle entfernt und die Substanz unter Stickstoff abgekühlt. Man erhielt eine zähflüssige farblose Flüssigkeit. Analyse mittels GPC bestätigte den vollständigen Umsatz des 3-(3,5-di-tert.butyl-4-hydroxyphenyl)propionsäuremethylester.

### Beispiel 13

122,6 g 3-(3,5-di-tert.butyl-4-hydroxyphenyl)propionsäuremethylester, 420 mmol, 48,3 g Polyetheramin D 230 (BASF Aktiengesellschaft), 2 g p-Toluolsulfonsäure (10 mmol), und 0,5 g 50%ige Hypophosphorige Säure wurden in einen 500-ml-Kolben gegeben und auf 180°C erhitzt. Das entstehende Methanol wurde über eine Destillationsbrücke abgetrennt. Der Umsatz wurde über die Aminzahl bestimmt. nach 4 h betrug der Umsatz 91 %. Das Produkt war hellgelb, glasartig und klar.

## Patentansprüche

1. Stabilisatoren enthaltend mindestens zwei phenolische Gruppen, die durch ein Polyol und/oder Amin mit einem zahlenmittleren Molekulargewicht von 100xF g/mol bis 150xF g/mol, wobei der Ausdruck F die Anzahl der phenolischen Gruppen im Molekül darstellt, als Verbindungsrest (II) miteinander verbunden sind, und wobei für (II) das zahlenmittlere Molekulargewicht (Mn) kleiner ist als das gewichtsmittlere Molekulargewicht (Mw).

2. Stabilisatoren gemäß Anspruch 1, **dadurch gekennzeichnet, daß** (II) mindestens ein Schwefelatom enthält.

3. Stabilisatoren gemäß Anspruch 1, **dadurch gekennzeichnet, daß** (II) mindestens zwei Alkylengruppen enthält, die eine unterschiedliche Anzahl an Kohlenstoffatomen aufweisen.

4. Stabilisatoren gemäß Anspruch 1, **dadurch gekennzeichnet, daß** die Stabilisatoren eine Viskosität bei Raumtemperatur (25°C) von η = 10⁻²-10² Pas aufweisen.

5. Thermoplastische Kunststoffe enthaltend Stabilisatoren gemäß einem der Ansprüche 1 bis 4.

6. Thermoplastische Polyurethane enthaltend Stabilisatoren gemäß einem der Ansprüche 1 bis 4.

7. Verfahren zur Herstellung von thermoplastischen Polyurethanen durch Umsetzung von (a) Isocyanaten mit (b) gegenüber Isocyanaten reaktiven Verbindungen mit einem Molekulargewicht von 500 bis 10000 und gegebenenfalls (c) Kettenverlängerungsmitteln mit einem Molekulargewicht von 50 bis 499 gegebenenfalls in Gegenwart von (d) Katalysatoren und/oder (e) üblichen Hilfs- und/oder Zusatzstoffen, **dadurch gekennzeichnet, daß** man die Umsetzung in Gegenwart von Stabilisatoren gemäß einem der Ansprüche 1 bis 4 durchführt.

8. Verfahren zur Stabilisierung von thermoplastischen Polyurethanen, **dadurch gekennzeichnet, daß** man thermoplastisches Polyurethan in geschmolzenem Zustand mit einem Stabilisator gemäß einem der Ansprüche 1 bis 4 mischt.

9. Verwendung von Stabilisatoren gemäß einem der Ansprüche 1 bis 4 zur Stabilisierung von thermoplastischen Polyurethanen.

10. Verfahren zur Herstellung von Stabilisatoren gemäß einem der Ansprüche 1 bis 4, **dadurch gekennzeichnet, dass** man Verbindungen enthaltend mindestens eine phenolische Gruppe sowie mindestens eine Carboxylgruppe mit einem Polyol und/oder Amin in Gegenwart von basischen Katalysatoren verestert, amidiert, umestert oder umamidiert.

## Claims

1. A stabilizer comprising at least two phenolic groups bonded to one another via a connecting residue (II) which is a polyol and/or amine with a number-average molecular weight of from 100 x F g/mol to 150 x F g/mol, where the term F is the number of phenolic groups in the molecule, the number-average molecular weight (Mn) of (II) being smaller than its weight-average molecular weight (Mw).

2. The stabilizer according to claim 1, wherein (II) comprises at least one sulfur atom.

3. The stabilizer according to claim 1, wherein (II) comprises at least two alkylene groups which differ in their number of carbon atoms.

4. The stabilizer according to claim 1, which has a viscosity η of from 10⁻²-10² Pas at room temperature (25°C).

5. The thermoplastic comprising stabilizers according to any of claims 1 to 4.

6. The thermoplastic polyurethane comprising stabilizers according to any of claims 1 to 4.

7. The process for preparing thermoplastic polyurethanes by reacting (a) isocyanates with (b) compounds reactive towards isocyanates and having a molecular weight of from 500 to 10000 and, if appropriate, with (c) chain extenders having a molecular weight of from 50 to 499, where appropriate in the presence of (d) catalysts, and/or of (e) conventional auxiliaries and/or additives, which comprises carrying out the reaction in the presence of stabilizers according to any of claims 1 to 4.

8. The process for stabilizing thermoplastic polyurethanes, which comprises mixing molten thermoplastic polyurethane with a stabilizer according to any of claims 1 to 4.

9. The use of stabilizers according to any of claims 1 to 4 for stabilizing thermoplastic polyurethanes.

10. A process for preparing stabilizers according to any of claims 1 to 4, which comprises esterifying, amidating, transesterifying, or transamidating compounds comprising at least one phenolic group, and also at least one carboxy group, using a polyol and/or amine in the presence of basic catalysts.

## Revendications

1. Stabilisants contenant au moins deux groupes phénoliques, qui sont mutuellement reliés par un polyol et/ou une amine ayant un poids moléculaire moyen numérique de 100xF g/mole à 150xF g/mole, l'indice F représentant le nombre de groupes phénoliques dans la molécule, sous la forme d'un radical de composé (II), le poids moléculaire moyen numérique (Mₙ) de (II) étant inférieur au poids moléculaire moyen pondéral (M_{w}).

2. Stabilisants suivant la revendication 1, **caractérisés en ce que** (II) contient au moins un atome de soufre.

3. Stabilisants suivant la revendication 1, **caractérisés en ce que** (II) contient au moins deux groupes alkylène qui présentent un nombre différent d'atomes de carbone.

4. Stabilisants suivant la revendication 1, **caractérisés en ce que** les stabilisants présentent une viscosité à la température ambiante (25°C) de η = 10⁻²-10² Pas.

5. Substances synthétiques thermoplastiques contenant des stabilisants suivant l'une des revendications 1 à 4.

6. Polyuréthannes thermoplastiques contenant des stabilisants suivant l'une des revendications 1 à 4.

7. Procédé de préparation de polyuréthannes thermoplastiques par réaction (a) d'isocyanates avec (b) des composés réactifs vis-à-vis des isocyanates présentant un poids moléculaire de 500 à 10 000 et éventuellement (c) des agents d'allongement de chaîne présentant un poids moléculaire de 50 à 499, éventuellement en présence (d) de catalyseurs et/ou (e) d'adjuvants et/ou d'additifs usuels, **caractérisé en ce qu'**on effectue la réaction en présence de stabilisants suivant l'une des revendications 1 à 4.

8. Procédé de stabilisation de polyuréthannes thermoplastiques, **caractérisé en ce qu'**on mélange du polyuréthanne thermoplastique à l'état fondu avec un stabilisant suivant l'une des revendications 1 à 4.

9. Utilisation de stabilisants suivant l'une des revendications 1 à 4, pour la stabilisation de polyuréthannes thermoplastiques.

10. Procédé de préparation de stabilisants suivant l'une des revendications 1 à 4, **caractérisé en ce qu'**on estérifie, amide, transestérifie ou transamide des composés contenant au moins un groupe phénolique ainsi qu'au moins un groupe carboxyle avec un polyol et/ou amine, en présence de catalyseurs basiques.
